# EUROPEAN PATENT APPLICATION

(11) **EP 3 858 729 A1**
(43) Date of publication of application: **04.08.2021**
(21) Application number: 20154101.8
(22) Date of filing: 28.01.2020
(51) Int. Cl.: B64C 23/06, G05D 1/10

(54) **AIRCRAFT POSITION DETERMINATION DEVICE FOR NAVIGATION CONTROL OF AIRCRAFT AND A RESPECTIVE AIRCRAFT WITH AN AIRCRAFT-POSITION DETERMINATION DEVICE AND A METHOD FOR OPERATING THE AIRCRAFT-POSITION DETERMINATION DEVICE FOR DETERMINING A TARGET POSITION OF THE AIRCRAFT WITHIN A PLURALITY OF AIRCRAFT FORMING AN AIRCRAFT FORMATION**

(71) Applicant: MTU Friedrichshafen GmbH, 88045 Friedrichshafen (DE); Rolls-Royce plc, London SW1E 6AT (GB)
(72) Inventor: Kottke, Thomas, 71139 Ehningen (DE); Weidele, Horst, 88709 Meersburg (DE); Clarke, Andrew M G, NAILSEA, NORTH SOMERSET, Bristol (GB)
(74) Representative: Eisenführ Speiser

(57) **Abstract**

The invention relates to an aircraft-position determination device (10) for determining a target position (TP) of an aircraft (100) within a flight formation. (150). The position determination device is configured to ascertain position data (PD) indicative of a current position of all the aircraft within the formation, velocity data (VD) indicative of a current velocity measure of the aircraft within the formation and wake data (WD) indicative of a wake region, in particular a slipstream region and/or a vortex-drag region generated by a respective aircraft of the formation in a surrounding fluid. A target-position determination unit (15) is configured to determine, using the ascertained data and a positioning algorithm, a target position to be adopted by the aircraft, the target position being in at least one wake region.

## Description

The invention relates to an aircraft slipstream position determination device, to a navigation control device, to an aircraft, to a method for controlling operation of an aircraft -position determination device, and to a computer program.

US 2005/0230563 A1 describes an integrated system for automatic control of flight formations of multiple vehicles, such as aircraft, helicopters, or space platforms. The system is used to control multiple aircraft in a pre-determined flight formation and provide positive identification, control and discrete communications between any number of aircraft in order to prevent mid-air collisions between the aircraft while forming the formation and during the flight in formation.

US 2019/0287412 A1 describes an on board computing apparatus and associated method that process aircraft data gather from aircraft to pair aircraft during at least portions of a flight route. In certain cases, paired aircraft may be controlled to fly in formation, which can allow an aircraft following a lead aircraft to take advantage of a vortex generated by the lead aircraft.

When a flying object moves through a fluid such as air, a wake region is generated. A wake region is defined as that region of space showing disturbed flow, often turbulent, downstream of a solid body moving through a fluid, and caused by the flow of the fluid around the body. A slipstream region is a particular type of wake region that is defined as that region behind a moving object in which the wake of the fluid, typically air or water, moves at velocities comparable to the moving object, relative to the fluid through which the object is moving. The term "slipstreaming" describes an object, such as an aircraft, travelling inside the slipstream of another obj ect.

Another related effect is referred to a vortex-surfing and is associated to a vortex-drag region. A vortex-drag region is that region of space being under the influence of vortices generated by the object moving through the fluid. In the case of aircraft, trailing and wingtip vortices are circular patterns of rotating air left behind a wing as it generates lift. When a wing generates aerodynamic lift the air on the top surface has lower pressure relative to the bottom surface. Air flows from below the wing and out around the tip to the top of the wing in a circular fashion when moving in operative direction. An emergent circulatory flow pattern named vortex is observed, featuring a low-pressure core.

The inventors have realized that the method described in US 2019/0287412 A1 is likely to suffer inaccuracies in the fundamental aircraft location data as a result of uncertainty in the GPS data which, when combined with possible transmission delays, can result in suboptimal positioning of the aircraft within the formation. It would therefore be beneficial to enable an optimized control of the position of an aircraft in a flight formation, particularly in a close flight formation, and thereby to increase the safety of the aircraft while optimizing fuel consumption.

According to a first aspect of the present invention, an aircraft-position determination device is described. The aircraft-position determination device is suitable for determining a target position of an aircraft within a formation of aircraft, for assisting formation of a flight formation.

The aircraft-position determination device comprises a position ascertainment unit that is configured to ascertain position data indicative of a current position of the aircraft of the formation of aircraft and to provide respective aircraft-position data indicative thereof.

The aircraft-position determination device also comprises a velocity ascertainment unit which is configured to ascertain velocity data indicative of a current velocity measure of the aircraft of the formation and to provide respective aircraft velocity data indicative thereof.

The aircraft-position determination device further comprises a local environment data ascertainment unit configured to ascertain environment data pertaining to local environmental conditions in a vicinity of the formation and to provide local-environment data indicative thereof. The local environmental conditions may include, but are not restricted to, in particular, air pressure, humidity, airflow velocity and direction, temperature or any combination thereof.

The aircraft-position determination device also comprises a wake data ascertainment unit which is configured to ascertain wake data indicative of a wake region, in particular a slipstream region and/or a vortex-drag region generated by a respective aircraft of the formation, or by the formation as a whole.

Further, the aircraft-position determination device comprises a target-position determination unit which is in communicating connection with the position ascertainment unit, the velocity ascertainment unit and the slipstream data ascertainment unit. The target-position determination unit is configured to determine and provide target position data indicative of a target position to be adopted by the aircraft within the flight formation, the target position being in at least one wake region. The target position data is determined by the target-position determination unit using the aircraft-position data, the aircraft-velocity data and the aircraft-wake data in accordance with a predetermined positioning algorithm.

When an aircraft is located at a target position that is located in the slipstream region caused by another aircraft, and it is following that aircraft by moving at substantially the same speed, the aircraft at the target position will require less power to maintain its speed than if both aircraft were moving independently. Thus, following in the slipstream of another aircraft, allows for significantly improved fuel efficiency due to reduced drag. Alternatively, or additionally, positioning an aircraft in an upward part of the wingtip vortex of a leading aircraft increases the lift force, thus enabling a reduction of fuel consumption. An aircraft positioned at the determined target position thereby takes advantage of aerodynamic benefits such as reduced profile drag and lift caused by the vortices without having to rely solely on the individual piloting skills to maintain formation.

The aircraft-position determination device is therefore advantageously configured to determine the target position that is in at least one wake region, i.e., in at least one wake region generated by an aircraft within the formation. In order to provide target position data indicative thereof, the aircraft-position determination device is configured ascertain position data indicative of a respective current position of the aircraft within the formation, velocity data indicative of the current velocity of the respective aircraft within the formation, and wake data indicative of the wake region, in particular a slipstream region and/or a vortex-drag region generated by respective aircraft within the formation or by the formation as a whole in a surrounding fluid. The target position data is determined in accordance with a predetermined positioning algorithm, the target position to be adopted by the aircraft among the aircraft formation. Therefore, the aircraft-position determination device advantageously enables optimized control of multiple aircraft in close flight formation and thereby increases safety while optimizing fuel consumption.

Advantageous developments of the invention are found in the dependent claims and indicate in detail advantageous possibilities to realize the concept described above within the scope of the task as well as with regard to further advantages. In the following, developments of the aircraft-position determination device of the first aspect of the invention will be described.

In an embodiment, the velocity ascertainment unit is configured to ascertain as the velocity measure, a current true airspeed (TAS) indicative of the speed of the aircraft relative to the air mass in which it is flying. In another embodiment, the velocity measure is indicative of a current relative velocity of the aircraft with respect to at least one, preferably all of the remaining aircraft in the formation.

In another embodiment, the aircraft-position determination device further comprises a local environment data ascertainment unit configured to ascertain environment data pertaining to local environmental conditions in a vicinity of the formation and to provide local-environment data indicative thereof. The local environmental conditions may include, but are not restricted to, in particular, air pressure, humidity, airflow velocity and direction, temperature or any combination thereof. In this particular development, the target position determination unit is communicating connection with the local environment data ascertainment unit and configured to determine the target position data further using the local-environmental data.

In a particular development, the position ascertainment unit, the velocity ascertainment unit, the local environment data ascertainment unit, or any combination thereof, are configured to determine the position data, the velocity data, or the environment data respectively, for instance by a position sensing unit, a velocity sensing unit, or at atmospheric-condition sensing unit configured to determine and provide the respective data. Alternatively, in other developments, the position ascertainment unit, the velocity ascertainment unit, the local environment data ascertainment unit, or any combination thereof are configured to receive the position data, the velocity data, or the environment data respectively from an external data-providing device.

In a particular development, the wake data ascertainment unit comprises a receiving unit for receiving, from the aircraft of the formation, the wake data pertaining to the respective aircraft.

Alternatively, or additionally, in another development, the wake data ascertainment unit comprises a receiving unit for receiving identification data indicative of a type of aircraft, and a storage unit for storing respective slipstream data associated to one or more types of aircraft. In this particular development, the wake data ascertainment unit is configured to provide, as ascertained wake data, that stored wake data correspond to the type of aircraft providing the identification data.

In yet another development the wake data is ascertained using calculations based on aerodynamic models using data provided by dedicated sensors and/or based on data associated to a type or aircraft generating the wake, i.e., creating "fingerprint" of a slipstream and vortices according to a predetermined aerodynamical model.

Optionally, in a development, the wake data ascertainment unit comprises an imaging device for obtaining image data of the aircraft within the formation of aircraft and an image analysis unit which is configured to receive the image data, to determine, using the image data, the type of aircraft of the respective aircraft, and to provide the identification data indicative of the type of the imaged aircraft to the receiving unit.

In another development, the position-determination unit is configured to ascertain additional data and to determine the target position further based on this additional data. For instance, in a particular development, the position-determination unit is configured to ascertain radar-positioning data indicative of a position of a radar unit, e.g. the radar-positioning data comprise data of the angle of arrival of a radar signal. Preferably further, in the particular development, the position-determination unit is configured to determine the target position, in accordance with the positioning algorithm, further using the radar-positioning data.

In a development, the positioning algorithm is configured to determine the target position so that the aircraft generating the wake region is located between the source of the radar signal and the target position. Advantageously, this target position is determined either continuously or with a predetermined frequency, to avoid leaving a radar shadow cast by the aircraft generating the wake.

In an embodiment, the radar-positioning data is indicative of an entrance angle of an arriving radar signal. The entrance angle is determined using a predetermined direction such as the flying direction of the flight formation and a virtual straight line linking a radar unit providing the radar signal and that aircraft of the formation being closest to the radar unit.

It is preferable to approve whether the target position unit is at a respective distance from every other aircraft of the formation that exceeds a minimum safety distance threshold.

Preferably the aircraft is controlled to adopt the target position using the target-position data and the current-position data when said respective distance exceeds the minimum safety distance threshold. Additionally or alternatively the aircraft is controlled to adopt a position along a straight line determined from the arriving radar signal, irrespective of the wake region when said respective distance does not exceed the minimum safety distance threshold.

The wake data ascertainment unit is configured to ascertain wake data indicative of a set of possible target positions in the form of, for instance, an ellipse or an ellipsoid located within the wake region of a leading aircraft. In particular possible target-position data indicative of an ellipse or an ellipsoid based on the respective wake region of a preceding aircraft in the aircraft formation are ascertained. Additionally or alternatively an entrance angle of a radar signal is ascertained, the radar signal is received by that aircraft closest to a radar unit providing the radar signal, the entrance angle being determined with respect to a given direction

The target-position determination unit is preferably configured to determine the target position as an intersection point of the ellipse or the ellipsoid and the straight line from the arriving radar signal, the straight line virtually linking the radar unit and that aircraft of the formation being closest to the radar unit and thus casting a so called radar shadow. The target position is thus located in the wake region of the leading aircraft, and in the radar shadow cast by that aircraft closest to the radar unit.

Further, the set of possible target positions and the target position are advantageously determined at different points in time, as a function of the moving interception point due to the moving aircraft relative to the static radar position.

In the case where the entrance angle is substantially perpendicular to the flying direction of the aircraft, the target position determination unit may not be able to determine a target position as the intersection between the ellipse in the wake region and the straight line form the arriving radar signal since there is no intersection. In this particular case, the aircraft can opt to either remain in the wake region but no longer within the radar shadow offered by the leading aircraft, or to fly out of the wake region while remaining in the radar shadow and then later forming a new wake region relative to each other with a new leading aircraft so that the flight formation including the leading aircraft is flying in the radar shadow of the aircraft following which is closest to the radar unit.

In a development, the positioning algorithm is configured to determine the target position in a steady region of the slipstream region in order to increase the safety of the aircraft by minimizing the risk of the aircraft being disturbed or even endangered by vortices generated by the preceding aircraft.

According to a second aspect of the present invention, a navigation control unit suitable for controlling a position of an aircraft is presented. The navigation control unit comprises an aircraft-position determination device according to the first aspect of the invention. The navigation control unit also comprises a position control unit connected to the position ascertainment unit of the aircraft-position determination device. The position control unit is configured to determine and provide current-position data indicative of a current position of the aircraft, in particular a current position relative to the remaining aircraft of the formation of aircraft. The navigation control unit also comprises an autopilot unit that is connected to the aircraft-position determination device and to the position-control unit. The autopilot unit is configured to receive the target position data and the current-position data and to control the aircraft for adopting the target position using the target position data and the current-position data, preferably using a predetermined algorithm for selecting a suitable route to enter the wake region with a relatively low impact on the aerodynamic conditions of the aircraft.

The navigation control unit of the second aspect of the invention thus shares the advantages of the aircraft-position determination device and is advantageously configured to guide an aircraft comprising a navigation control unit to the target position determined by the aircraft-position determination device for optimizing fuel consumption.

In the following, developments of the navigation control unit of the second aspect will be described.

In a particular development, the navigation control unit further comprises a data output unit configured to provide the current-position data, or current-velocity data indicative of a current velocity of the aircraft, or wake data indicative of a wake region, in particular a slipstream region and/or a vortex-drag region generated by the aircraft in a surrounding fluid, or identification data indicative of a type of the aircraft or any combination thereof. In a development of the navigation control unit configured to provide the current-position data, the data output unit is connected to the position control unit. Advantageously, a development of the navigation control unit comprises a data output unit connected to external velocity sensors configured to provide current-velocity data. Additionally, or alternatively, the data output unit is connected to an external storage unit comprising identification data relative to the aircraft comprising the navigation control unit. Additionally, or alternatively, the data output unit is connected to one or more external pressure sensors configured to determine and provide wake data indicative of the wake region. The pressure sensors can be placed on the aircraft or can be connected thereto, for instance as a decoy. Alternatively, the storage unit also comprises the wake data associated to the aircraft comprising the navigation control unit.

In another development, the position control unit is configured to provide GPS-data pertaining to a current position of the aircraft relative to the aircraft of the formation of aircraft, and to obtain GPS data pertaining to the respective positions of the aircraft of the formation of aircraft. In particular, in a development, the position control unit is configured to provide the GPS-data in accordance with the Identification Friend or Foe protocol, in particular according to a Mode S squitter mode protocol.

In another development, the position control unit comprises a radar unit for determining the current position of the aircraft relative to the remaining aircraft of the formation of aircraft.

In yet another development, the position control unit additionally or alternatively comprises a laser unit for determining the current position of the aircraft relative to the remaining aircraft of the formation of aircraft.

Using either GPS information, or a radar unit or a laser unit, or any combination thereof for determining the current positions of the aircraft relative to the remaining aircraft of the formation of aircraft enable the implementation of a so-called electronic tow-bar. For instance, in a particular development, a laser or a radar unit is used for detection of aircraft located ahead the given aircraft and GPS is used to detect positions of aircraft travelling in a side or rear position with respect to the given aircraft.

Using respective dedicated on board sensors, i.e., sensors located on or in the aircraft, to determine and provide the position data, the velocity data, the wake data, the environment data or any combination thereof, reduces the need to transmit control and command data to position the aircraft in the formation, since each aircraft derives the corresponding set of fata using the dedicated on board sensors, thus making the navigation control unit more immune to transmission delays.

Furthermore, it is beneficial to use an automized control system including dedicated on board sensors to ascertain the necessary data for controlling the formation, in particular minimizing fuel consumption due to aerodynamic reasons by flying in the slipstream of the formation, and using a positioning algorithm considering safety in relation to aerodynamics like vortices and other features for determining a target position and, preferably a suitable route to arrive at said target position.

Also, a development of the navigation control unit is further configured, while the aircraft in at the target position in the wake region of a preceding aircraft, and using the ascertained data, to determine an exit position outside of the wake region and a suitable route, preferably minimizing the aerodynamical impact of the boundary of the wake region on the aircraft, in cases where the aircraft has to leave the formation.

With the data provided, the autopilot units of the aircraft in the formation share information and are able to arrange the positions of the respective aircraft in the formation of aircraft relative to each other in order to optimize the aerodynamic lift and/or drag. Positions are thereby hold as if the aircraft were towed by a drawbar. However, the target position relative to the other aircraft is adaptable based on, for example changing weather conditions ascertained by the local environmental data ascertaining unit which may include a weather forecast, e.g. rising winds and thunderstorms, etc.

According to a third aspect of the present invention, an aircraft comprising a navigation control unit according to the second aspect is disclosed. The aircraft of the third aspect thus shares the advantages of the navigation control unit of the second aspect or of any of its embodiments.

In an exemplary formation of aircraft according to the third aspect, each aircraft comprises a navigation control unit. In the particular case of a formation of aircraft, the navigation control unit is part of a flight control system. Each of the aircraft comprises either a sensor system such as a radar or a laser unit or a GPS-based system for determining the respective positions of the aircraft with respect to the remaining aircraft in the formation. One of the aircraft is designated as a leading aircraft, for example, in accordance with a predetermined selection rule. The aircraft-position determination device of the leading aircraft does not provide a target position. However, the position, velocity and wake generated by the leading aircraft are necessary for determining the target position of the remaining aircraft that are not the leading aircraft. In an exemplary development, the current position data of a given aircraft is radio-transmitted to the navigation control unit of the remaining aircraft in the formation.

The navigation control systems are then configured to calculate, for the respective aircraft, and preferably in a hierarchical manner, i.e., aircraft by aircraft in a sequential way, the target position to be adopted and to transmit the target position data to the autopilot unit. The current position and the target position are controlled in real-time or at predetermined intervals. Deviations are therefore identifiable and a repositioning of the aircraft is possible once a deviation has been identified.

To increase the reliability of the determination of the target position in the wake region, e.g., in the vortex-drag region or in the slipstream region, local atmospheric or weather data such as air pressure, humidity or temperature is advantageously needed.

The navigation control unit is therefore advantageously configured to optimize on a local basis the positions of a plurality of aircraft for forming a formation of aircraft. The navigation control units of the participating aircraft, which is part of a flight control or management system, interact in such a way that the aircraft of the formation are controlled like an electronic drawbar. As stated above, a first aircraft in the formation is the leading aircraft and the remaining aircraft are arranged in dependence on its position and velocity, as well as on the wake region it creates as it flies. If the leading aircraft leaves the formation, another aircraft is selected as a leading aircraft and the target positions of the remaining aircraft in the formation are determined again based on the new configuration of the formation.

Therefore, preferably, each aircraft of the formation of aircraft is configured to provide a "leave-formation" signal indicative of the aircraft leaving the formation and thereby not forming part of the formation. In this case, the aircraft-position determination unit is advantageously configured to, upon determining that the aircraft is intended to leave the formation, to provide a target position outside of the wake region, and the autopilot unit is configured to determine a suitable route for reaching the target position outside the wake region with minimal impact due to, for instance, turbulences experienced while leaving the wake region. The route can be calculated for instance to minimize the time the leaving aircraft spends traversing a boundary of the wake region.

According to a fourth aspect of the present invention, a method for operating an aircraft position determination device for determining a target position of an aircraft within a formation of aircraft for assisting in forming a flight formation is described. The method comprises:
- ascertaining position data indicative of a current position of the aircraft of the formation of aircraft and providing respective aircraft-position data indicative thereof;
- ascertaining velocity data indicative of a current velocity measure of the aircraft of the formation of aircraft and providing respective aircraft-velocity data indicative thereof;
- ascertaining wake data indicative of a wake region, in particular a slipstream region and/or a vortex-drag region generated by a respective aircraft of the formation of aircraft in a surrounding fluid, and providing respective aircraft-wake data indicative thereof;
- determining and providing, using the aircraft-position data, the aircraft-velocity data, the aircraft-wake data and a predetermined positioning algorithm, target position data indicative of a target position to be adopted by the aircraft among the formation of aircraft, the target position being in at least one wake region.

The method of the fourth aspect thus shares the advantages of the aircraft-position determination unit of the first aspect or of any of its developments.

In particular, in a development of the fourth aspect, the method further comprises ascertaining environment data pertaining to local environmental conditions, in particular air pressure amount, humidity amount, fluid velocity amount, fluid flow direction, and/or temperature amount, in a vicinity of the formation of aircraft and providing local-environment data indicative thereof. In this development, the determination of the target position data is performed using also the local-environment data.

In another development of the fourth aspect, the method further comprises:
- storing respective slipstream data associated to one or more types of aircraft;
- receiving from the aircraft of the formation of aircraft, identification data indicative of a type of the respective aircraft and provide, as ascertained data, that stored slipstream data corresponding to the type of aircraft;
- providing, as ascertained data, that stored slipstream data corresponding to the type of aircraft providing the identification data.

A fifth aspect of the present invention is formed by a method for controlling operation of a navigation control unit for controlling a position of an aircraft. The method of the fifth aspect comprises:
- carrying out the method of the fourth aspect of the invention;
- determining and providing current-position data indicative of a current position of the aircraft relative to the remaining aircraft of the formation of aircraft; and
- receiving the target-position data and the current-position data and controlling the aircraft to adopt the target position using the target-position data and the current-position data.

In a particular development, the method of the fifth aspect also comprises ascertaining, preferably by a wake data determination unit, possible target-position data indicative of an ellipse or an ellipsoid based on the respective wake region of a preceding aircraft in the aircraft formation;
- ascertaining, preferably by a position-data determination unit, an entrance angle of a radar signal received by that aircraft closest to a radar unit providing the radar signal, the entrance angle being determined with respect to a given direction, such as, for instance a flying direction of the aircraft formation.
- determining the target-position within the ellipse or ellipsoid, preferably by calculating an intersection point of the ellipse or ellipsoid and a straight line determined from the arriving radar signal and the aircraft closest to the radar unit; and
- controlling the aircraft to adopt the target position using the target-position data and the current-position data, only when the target position unit is at a respective distance from every other aircraft of the formation that exceeds a minimum safety distance threshold; and otherwise, controlling the aircraft 2 to adopt a position along the straight line determined from the arriving radar signal R, irrespective of the wake region.

In this particular development, the method offers a possibility to determine the target position further in dependence on an incoming radar signal, an in particular in dependence on an entrance angle of said radar signal, which is the angle, relative to a predetermined direction of a virtual line linking the radar unit providing the radar signal and that aircraft of the formation being the closest to the radar unit. The closest aircraft thus creates a so called radar shadow, where the remaining aircraft of the formation can be advantageously positioned to remain hidden from the radar unit. In cases where the radar shadow does not intersect with the wake region of the preceding plane, this embodiment enables to maintain the position of the aircraft within the radar shadow of the aircraft closest to the radar unit, thus overruling the positioning of the aircraft within a wake region.

According to a sixth aspect of the present invention, a computer program is disclosed, which comprises instructions which, when the program is executed by a computer, cause the computer to carry out the method of any one of the fourth or fifth aspects of the invention or of any of its embodiments.

It shall be understood that the aircraft-position determination device of claim 1, the navigation control unit of claim 6, the aircraft of claim 10, the methods of claims 11 and 13 and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter. The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form.

With regard to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination. In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable. Further advantages, features and details of the invention result from the following description of the preferred embodiments as well as from the drawings.

In the following,
Fig. 1 shows a schematic representation of a formation of aircraft.
Fig.2 shows a schematic block diagram of an embodiment of an aircraft-position determination device.
Fig. 3A shows a schematic block diagram of another embodiment of an aircraft-position determination device.
Fig. 3B shows a schematic block diagram of a particular wake data ascertainment unit.
Fig. 4 shows a schematic block diagram of a navigation control unit.
Fig. 5A. shows a schematic diagram of an aircraft.
Fig. 5B shows a schematic representation of a plurality of aircraft forming a formation.
Fig. 6 shows a schematic representation of another embodiment of an aircraft.
Fig. 7A shows a formation of aircraft, wherein the aircraft have respective radar units for determining relative positions.
Fig. 7B shows a formation of aircraft, wherein the aircraft have respective laser units for determining relative positions.
Fig. 8 shows a flow diagram of an embodiment of a method for controlling operation of an aircraft-position determination device.
Fig. 9 shows a flow diagram of an embodiment of a method for controlling operation of a navigation control unit for controlling a position of an air aircraft.
Fig. 10 shows a schematic representation of two aircraft forming a flight formation.
Fig. 11 shows a schematic representation of aircraft forming a flight formation at three different points in time.
Fig. 12 shows a schematic representation of aircraft in a flight formation at three different points in time.
Fig. 13 shows a schematic representation of aircraft in a flight formation in the presence of a radar unit.
Fig. 14 shows the flyby of aircraft in a flight formation relative to the position of the radar unit.

The following discussion will be focused on formation of aircraft formed by airplanes. However, the invention is not restricted to this type of aircraft. Alternative formations of aircraft include other types of aircraft such as helicopters, space platforms, drones, etc.

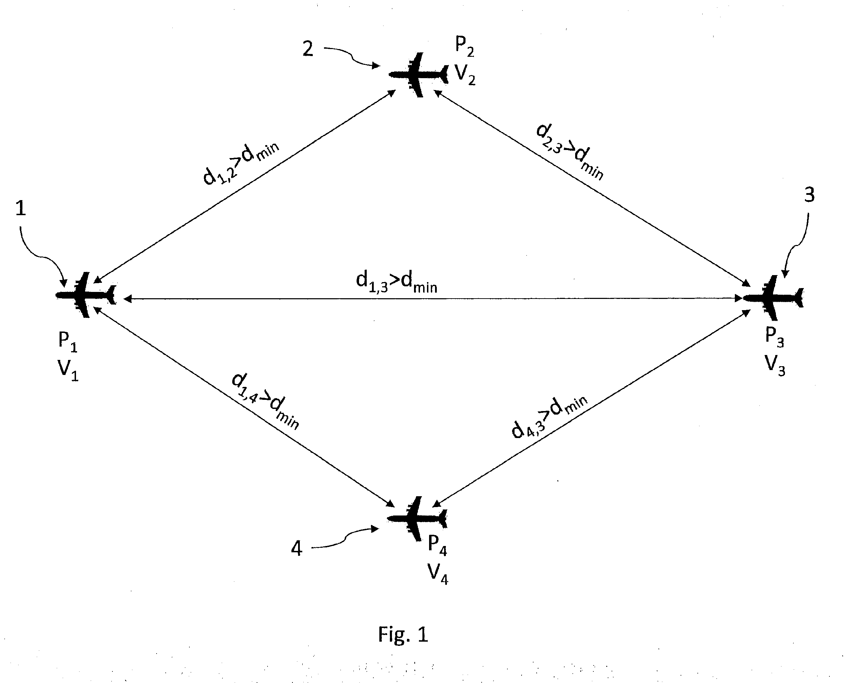

Fig. 1 shows a schematic representation of a plurality of aircraft, namely aircraft 1, 2, 3, 4 flying in formation and thus being a formation of aircraft. Two aircraft *i* and *j* are separated by a distance *dᵢⱼ* that is larger than a predetermined minimum distance *dₘᵢₙ* in order to separate trailing aircraft from flying through vortices of turbulent air generated by the preceding aircraft and to minimize a risk of collision. Each aircraft *i* is at a respective position *Pᵢ* and moving at a respective velocity *Vᵢ*.

However, aerodynamic benefits such as reduced profile drag and lift from the vortices generated by a preceding aircraft can be gained when the aircraft fly in right distance formation. Up to now, the establishment of formations of aircraft under these conditions typically rely on the individual piloting skills to maintain the formation.

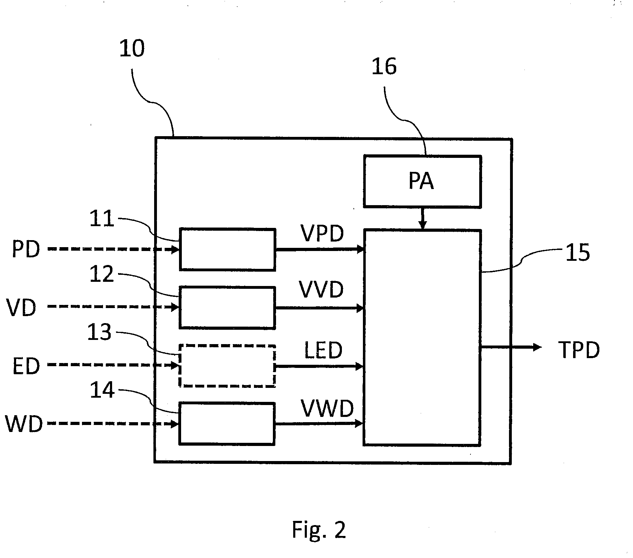

Fig.2 shows a schematic block diagram of an embodiment of an air aircraft-position determination device 10 for determining a target position of an air aircraft within a plurality of air aircraft for forming an aircraft formation. The aircraft-position determination device comprises a position ascertainment unit 11 configured to ascertain position data PD indicative of a current position *Pᵢ* of the aircraft of the formation of aircraft and to provide respective aircraft-position data APD indicative thereof. In the aircraft-position determination device 10, the position ascertainment unit 11 is configured to receive the position data PD from an external data source, preferably directly from the other aircraft in the formation of aircraft. In an alternative embodiment, the position ascertainment unit is configured to determine, using suitable data, such as GPS data or any alternative positioning data, the position data PD.

The aircraft-position determination device 10 also comprises a velocity ascertainment unit 12 that is configured to ascertain velocity data VD indicative of a current velocity measure *Vᵢ* of the aircraft of the formation of aircraft and to provide respective aircraft-velocity data AVD indicative thereof. In the aircraft-position determination device 10, the velocity ascertainment unit 12 is configured to receive the velocity data VD from an external data source, preferably directly from the other aircraft in the formation of aircraft. In an alternative embodiment, the velocity ascertainment unit is configured to determine, using suitable data, the velocity data VD

The aircraft-position determination device 10 optionally comprises, as indicated by the dashed line in Fig. 2, a local environment data ascertainment unit 13 which is configured to ascertain environment data ED pertaining to local environmental conditions, in particular air pressure amount, humidity amount, fluid velocity amount, flow direction, and/or temperature amount, in a vicinity of the formation of aircraft and to provide local-environment data LED indicative thereof. Here again, in the aircraft-position determination device 10, the local environment data ascertainment unit 13 is configured to receive the environment data ED from an external data source, preferably in the form of a weather report. In an alternative embodiment, the local environment data ascertainment unit is additionally or alternatively configured to determine the environment data ED, using suitable data, for instance data provided by a corresponding sensing unit.

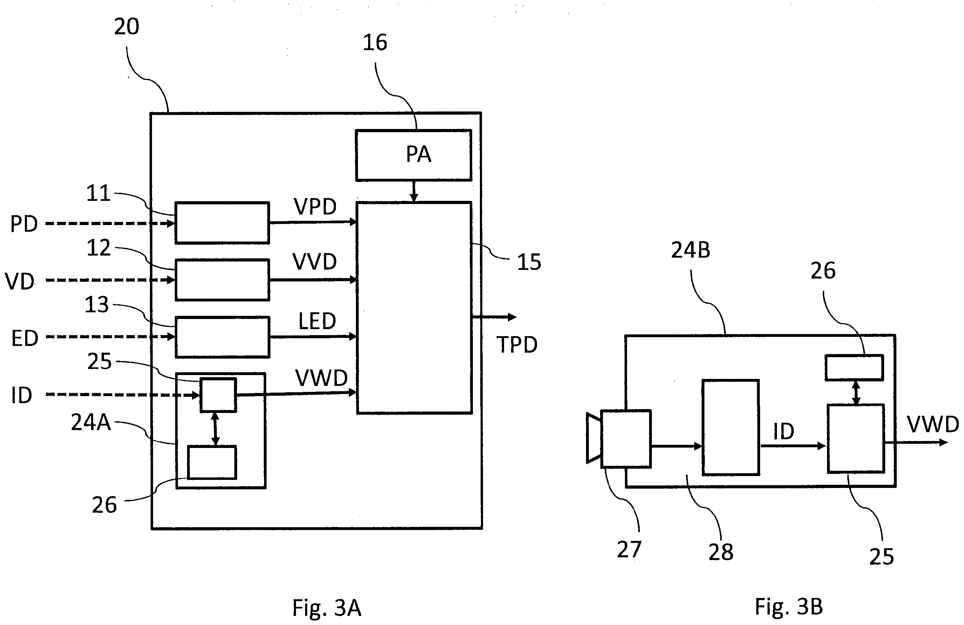

Further, the aircraft-position determination device 10 comprises a wake vortex data ascertainment unit 14 that is configured to ascertain wake data WD indicative of a wake region, in particular a slipstream region and/or a vortex-drag region generated by a respective aircraft of the formation of aircraft in a surrounding fluid, and to provide respective aircraft-wake data AWD indicative thereof. In the aircraft-position determination device 10, the wake data ascertainment unit 14 is configured to receive the wake data WD from an external data source, preferably from the respective aircraft of the formation of aircraft. In an alternative embodiment, the wake data ascertainment unit is additionally or alternatively configured to determine the wake data WD, using suitable data, as it will be explained with reference to the embodiment of Figs. 3A and 3B below.

The aircraft-position determination device 10 also comprises a target-position determination unit 15 which is in communicating connection with the position ascertainment unit 11, the velocity ascertainment unit 12, the local environment data ascertainment unit 13 and the slipstream data ascertainment unit 14. The target-position determination unit is configured to determine and provide target position data TPD indicative of a target position TP to be adopted by the air aircraft among the formation of aircraft, such that the target position being in at least one wake region of an aircraft of the formation of aircraft. The target position data is determined using the aircraft-position data APD, the aircraft-velocity data AVD, the local environment data LED, the aircraft-wake data AWD and a predetermined positioning algorithm PA, suitable stored in a storage unit 16.

Fig. 3A shows a schematic block diagram of another embodiment of an aircraft-position determination device 20. The following discussion will focus on those features that are different in comparison with the aircraft-position-determination device. The features that are essentially equal will be referred to using the same numerals as in Fig. 2. The aircraft-position determination device 20 of Fig. 3A comprises position ascertainment unit 11, a velocity ascertainment unit 12 and a local environment data ascertainment unit 13, as explained with reference to Fig. 2. It also comprises a wake data ascertainment unit 24A that is configured to ascertain wake data WD indicative of a wake region, in particular a slipstream region and/or a vortex-drag region generated by a respective aircraft of the formation of aircraft in a surrounding fluid, and to provide respective aircraft-wake data AWD indicative thereof. The wake data ascertainment unit 24A comprises a receiving unit 25 for receiving identification data ID indicative of a type of air aircraft. It further comprises a storage unit 26 for storing respective wake data associated to one or more types of aircraft. In the aircraft-position determination device 20, the wake data ascertainment unit 24A is advantageously configured to provide, as ascertained wake data, that stored wake data corresponding to the type of aircraft providing the identification data. The identification data ID is typically provided by the respective aircraft. Alternatively, it can be provided by an external data source such as a control tower.

Fig. 3B shows a schematic block diagram of a particular wake data ascertainment unit 24B for use in an embodiment of the aircraft-position determination device 20. The wake data ascertainment unit 24B comprises one or more imagining devices 27 configured to obtain image data of the air aircraft of the formation of aircraft. The wake data ascertainment unit also comprises an image analysis unit 28 which is configured to receive the image data from the imaging device 27, to determine, using the received image data, a type of aircraft of the respective air aircraft imaged, and to provide the identification data indicative of the type of the imaged air aircraft to the receiving unit 25. The receiving unit 25 is configured to receive the identification data indicative of the type of air aircraft. As in the case of the aircraft-position determination device 20 of Fig. 3A, the wake data ascertainment unit comprises a storage unit 26 for storing respective wake data associated to one or more types of aircraft and it is configured to provide, as ascertained wake data, that stored wake data corresponding to the type of aircraft providing the identification data.

Therefore, in different embodiments, the aircraft-position determination device ascertains the wake information in a different manner. An embodiment is configured to directly receive, from the aircraft of the formation of aircraft, respective wake data. In another embodiment, the aircraft in the formation of aircraft provide identification data. The identification data received is compared with data stored in a database for determining the wake, e.g. the slipstream and/or vortex drag that the respective aircraft produces around it. In another alternative embodiment, the aircraft-position determination unit uses image scanning and recognition to identify the type of aircraft.

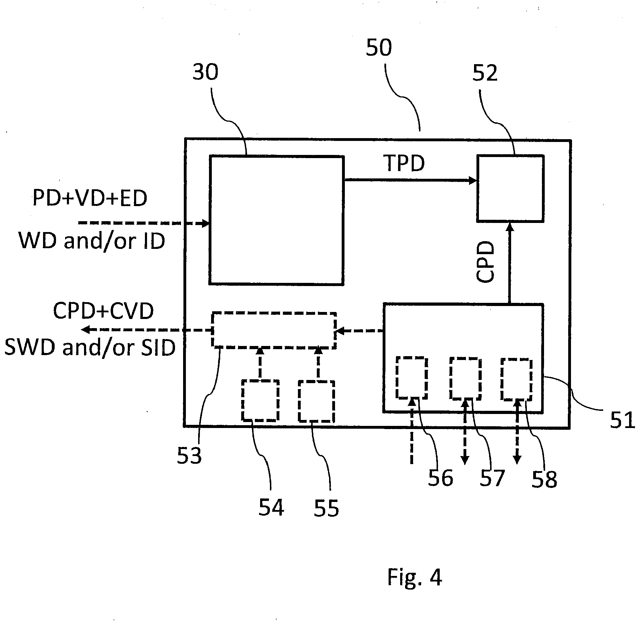

Fig. 4 shows a schematic block diagram of a navigation control unit 50 for controlling a position on an air aircraft among a formation of aircraft. The navigation control unit 50 comprises an air aircraft-position determination device 30 as described above. The navigation control unit 50 also comprises a position control unit 51 configured to determine and provide current-position data CPD indicative of a current position of the air aircraft. The navigation control unit also includes an autopilot unit 52 which is connected to the aircraft-position determination device 30 and to the position control unit 51 and configured to receive the target position data TPD and the current-position data CPD and to control the air aircraft for adopting the target position using the target position data and the current-position data.

Optionally, as indicated by the discontinued boxes, the navigation control unit 50 further comprises a data output unit 53 configured to provide the current-position data CPD, or current-velocity data CVD indicative of a current velocity of the aircraft, or self-wake data SWD indicative of a wake region, in particular a slipstream region and/or a vortex-drag region generated by the air aircraft in a surrounding fluid, or self-identification data indicative of a type of the aircraft, or any combination thereof. In the exemplary case of Fig. 4, the data output unit 53 is optionally connected to a sensing unit 54 comprising sensors for determining the current velocity data and/or the self-wake data and also optionally connected to a storage unit 55 comprising the safe-wake data and/or the self-identification data.

Also, optionally, in the navigation control unit 50 of Fig. 4, the position control unit 51 comprises a GPS unit 56 that is configured to provide GPS-data pertaining to a current position of the air aircraft to the aircraft of the formation of aircraft, and to obtain GPS data pertaining to the respective positions of the aircraft of the formation of aircraft. The GPS data is preferably provided in accordance with the Identification Friend or Foe protocol, in particular according to a Mode S squitter mode protocol.

The navigation control unit 50 may also optionally include a radar unit 57 for determining the current position of the air aircraft relative to the remaining aircraft of the formation of aircraft and/or a laser unit 58 for determining the current position of the aircraft relative to the remaining aircraft of the formation of aircraft.

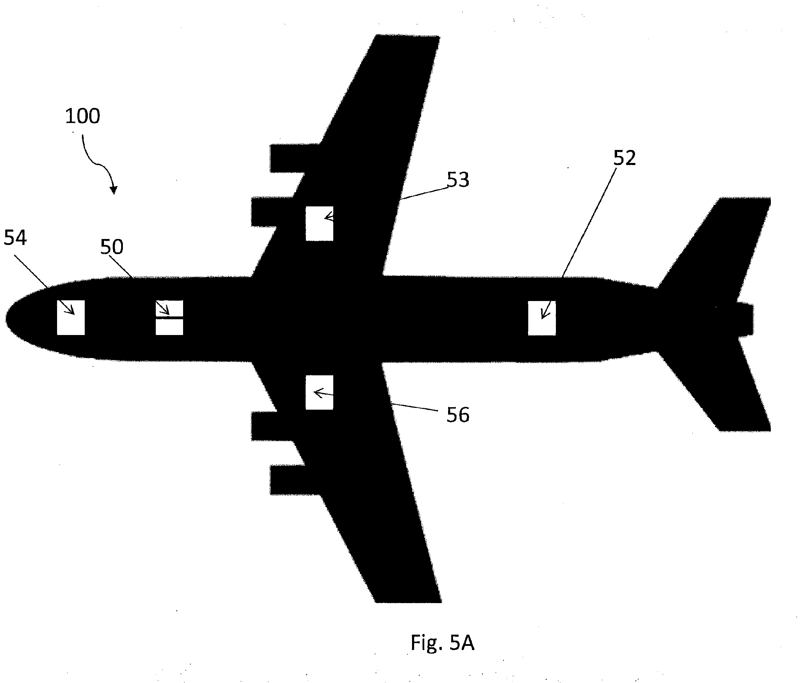

Fig. 5A. shows a schematic diagram of an aircraft 100. The aircraft 100 comprises a navigation control unit 50 including an autopilot unit for controlling the position and velocity of the aircraft 100. The aircraft also comprises a sensing unit for determining, for instance, the current velocity. The aircraft also includes a GPS unit 56 for providing GPS-data indicative of a current position of the aircraft and to obtain GPS data pertaining to the respective positions of the other aircraft of the formation of aircraft. The aircraft also provides a transceiver unit 53 configured as both a data output unit and as a receiving unit for receiving wireless signals comprising input data for the aircraft-position determination device of the navigation control unit 50.

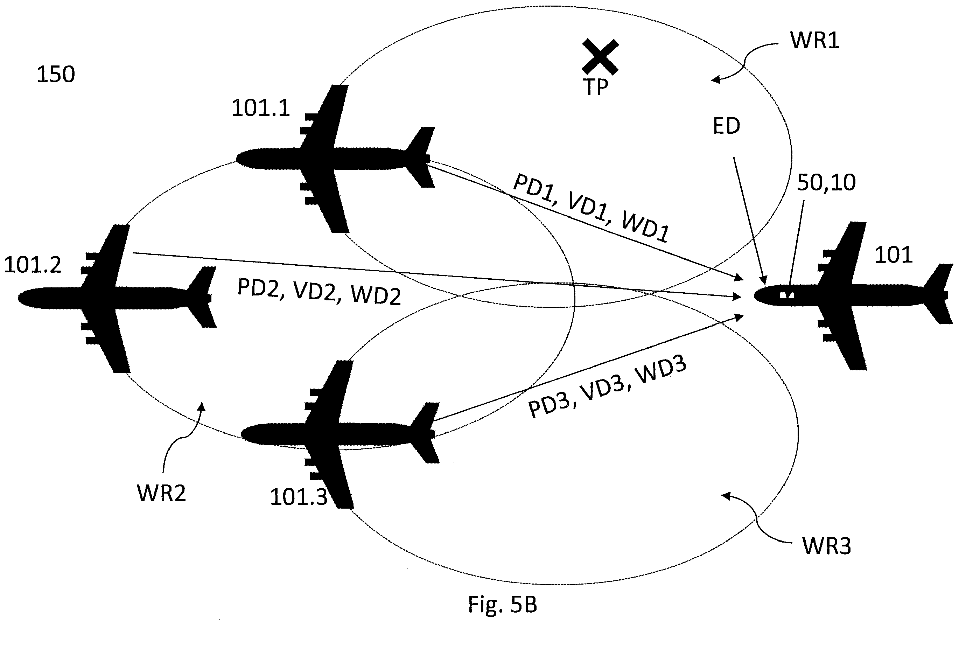

Fig. 5B shows a schematic representation of a plurality of aircraft, in the particular non-limiting example, aircraft 101, 101.1, 101.2 and 103.3. Aircraft 101.1, 101.2 and 101.3 are represented as flying in close formation and generate a respective wake region WR1, WR2 and WR3 indicated by dashed lines. Aircraft 101 comprises a navigation control unit 50 including an aircraft-position determination device 10. In order to benefit from the aerodynamic advantages of flying in close formation, such as fuel reduction caused by a higher lift or a reduced profile drag, the aircraft-position determination unit is configured to determine a target position TP being in at least one wake region of any one of the other aircraft of the formation. In the particular arrangement shown in Fig. 5B, the target position determined for aircraft 101 is in the wake region generated by aircraft 101.1 and 101.3.

Aircraft 101.1, 101.2 and 101.3 are configured to provide respective position data PD1, PD2, PD3, velocity data VD1, VD2, VD3, and wake data WD1, WD2, WD3, which are received by the aircraft 100. Alternatively, in other exemplary aircraft, the position data and/or the velocity data and/or the wake data is determined by the aircraft-position determination device. The aircraft-position determination device 10 is also configured to receive or to determine environment data ED pertaining to local environmental conditions, in particular air pressure amount, humidity amount, fluid velocity amount, flow direction, and/or temperature amount, in a vicinity of the formation of aircraft. Using the data input described above, the target position is determined, in accordance with a predetermined positioning algorithm. The autopilot unit of the navigation control unit 50, which is configured to receive the target position data and the current position data is advantageously configured to control the position of the aircraft 100 for adopting the target position TP.

Preferably, aircraft 101.1, 101.2, 101.3 also comprise a respective navigation control unit (not shown) configured to determine a corresponding target position for each aircraft and to control the aircraft for adopting said target position. Aircraft 101 is therefore advantageously configured to provide its current-position data, current velocity, and/or wake data, especially for other aircraft joining the formation at a position in the wake region generated by aircraft 101. In the particular arrangement shown in Fig. 5B, aircraft 101.2 is the leading aircraft of the formation. Aircraft 101.1 and 101.3 are located at their respective target position with respect to the leading aircraft, both in the wake region generated by said aircraft.

With the data ascertained by the navigation control unit, including that data ascertained by the aircraft-position determination device, the autopilot units of the aircraft in the formation arrange the position of the aircraft relative to each other to optimize the aerodynamic drift and drag while maintaining safety. The aircraft thus hold their respective relative positions as if they were towed by a drawbar. However, the relative positions can be dynamically changed in dependence on the atmospheric parameters.

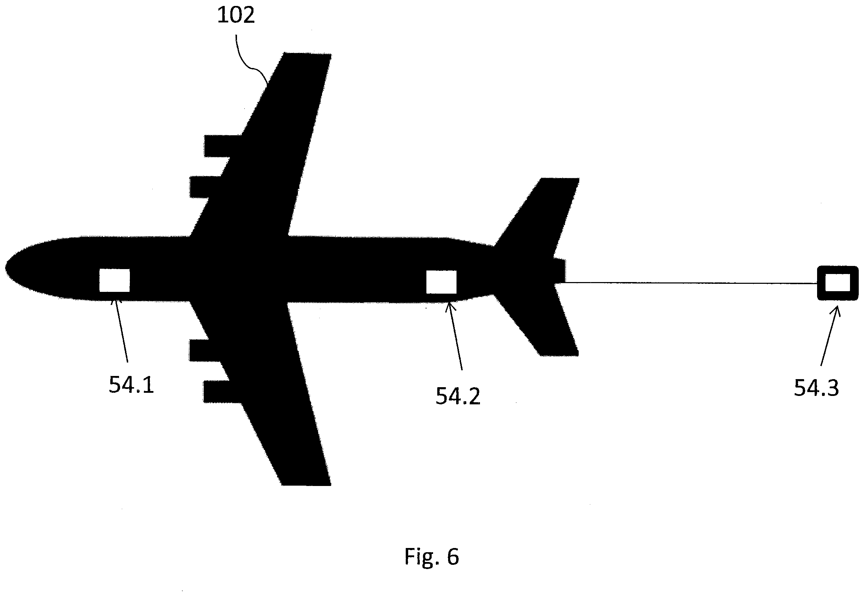

Fig. 6 shows a schematic representation of an aircraft 102 having a sensing unit comprising a plurality of sensors 54.1, 54.2, 54.3 for determining a wake region associated to said aircraft. Additionally, measurement values provided by pressure sensors 54.1 and 54.2 during flight in close formation allows for an estimation of whether or not aircraft 102 the conditions at the current position are those expected from the target position. Additionally, if more detailed information is required for an aircraft travelling behind, a dragging body with an additional pressure sensor 54.3 is advantageously used for increasing the accuracy of the wake data and thus for optimizing the target position.

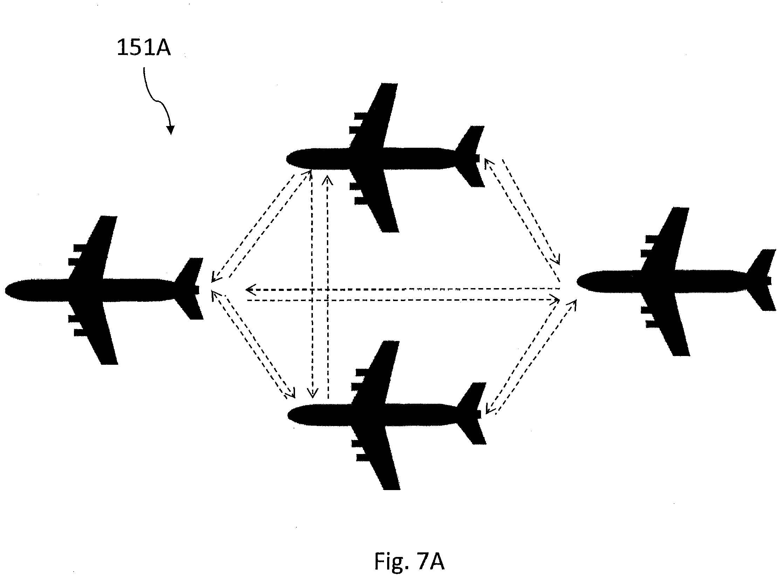

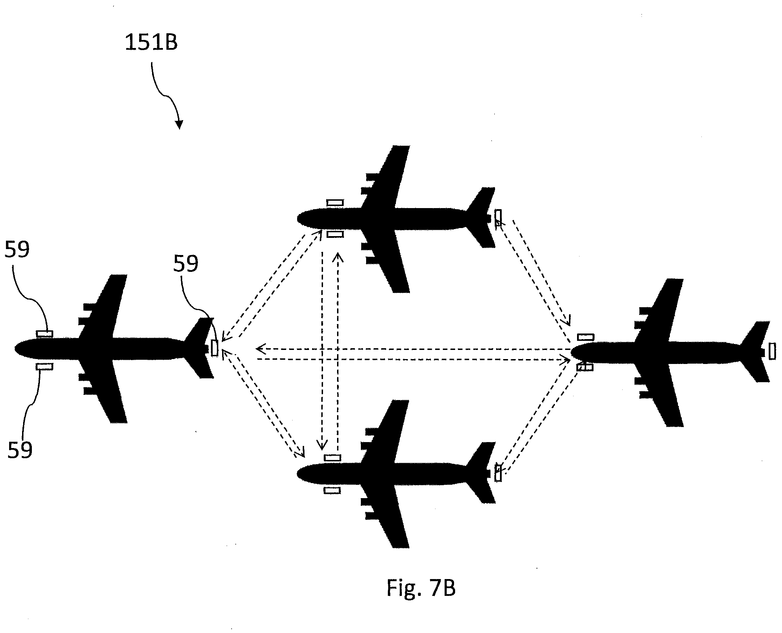

Fig. 7A and 7B show different examples of a formation of aircraft 151A and 151B communicating their respective positions using a radar unit and a laser or lidar unit respectively, as an alternative to exchanging data pertaining to the respective GPS coordinates. In all cases it is preferred that data pertaining to changes in the position or relative position is provided directly between the aircraft, since exchanging data via a control tower or any other relays system might be subject to an excessive a signal delay in view of the required accuracy. In the case of the formation of aircraft 151B of Fig. 7B, the aircraft comprise a plurality of reflectors 59 to enable the lidar and/or laser distance measurement. In Fig. 7B and for the sake of clarity, only the reflectors 59 of the leading aircraft are indicated.

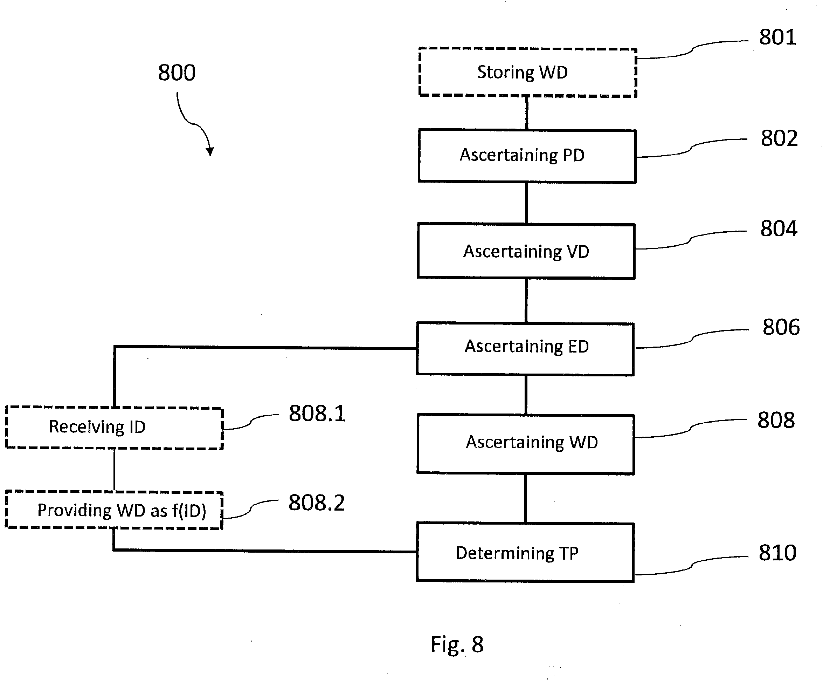

Fig. 8 shows a flow diagram of an embodiment of a method 800 for operating an air aircraft-position determination device for determining a target position of an aircraft within a plurality of aircraft forming an aircraft formation. The method comprises, in a step 802, ascertaining position data indicative of a current position of the aircraft of the formation of aircraft and providing respective aircraft-position data indicative thereof. The method also comprises, in a step 804, ascertaining velocity data indicative of a current velocity of the aircraft of the formation of aircraft and providing respective aircraft-velocity data indicative thereof. The method also comprises, in a step 806, ascertaining environment data pertaining to local environmental conditions, in particular air pressure amount, humidity amount, fluid velocity amount, fluid flow direction, and/or temperature amount, in a vicinity of the formation of aircraft and providing local-environment data indicative thereof. The method also comprises, in a step 808, ascertaining wake data indicative of a wake region, in particular a slipstream region and/or a vortex-drag region generated by a respective aircraft of the formation of aircraft in a surrounding fluid, and providing respective aircraft-wake data indicative thereof. Finally, the method 800 also comprise, in a step 810, determining and providing, using the aircraft-position data, the aircraft-velocity data, the local environment data, the aircraft-wake data and a predetermined positioning algorithm, target position data indicative of a target position to be adopted by the air aircraft among the formation of aircraft, the target position being in at least one wake region.

Optionally, as indicated by the discontinued boxes, the method 800 may also comprise, in a step 801 storing respective slipstream data associated to one or more types of air aircraft. The method also comprises, for ascertaining the wake data, a step 808.1 wherein identification data indicative of a type of the respective aircraft is received from the aircraft of the formation of aircraft and a step 808.2 wherein that stored wake data corresponding to the type of air aircraft providing the identification data is provided as ascertained aircraft wake data.

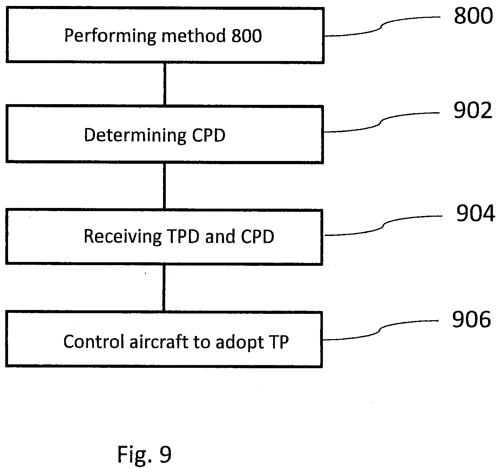

Fig. 9 shows a flow diagram of a method 900 for controlling operation of a navigation control unit for controlling a position of an air aircraft. The method 900 comprises carrying out the method 800. The method 900 also comprises, in a step 902, determining and providing current-position data indicative of a current position of the air aircraft relative to the remaining aircraft of the formation of aircraft. The method 900 also comprises, in a step 904, receiving the target-position data and the current-position data and, in a step 906, controlling the aircraft to adopt the target position using the target-position data and the current-position data.

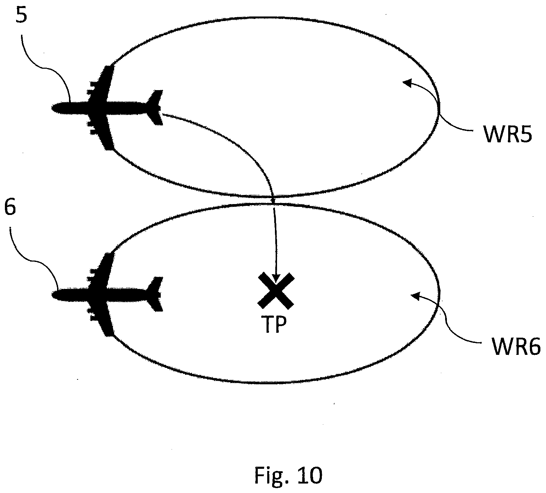

Fig. 10 shows a schematic representation of two aircraft forming a flight formation. Initially the two aircraft 5 and 6 are flying in parallel both forming a wake region WR5 and WR6. The aircraft 5 and 6 comprise a navigation control unit, and, in this particular example, dedicated on board sensors for determining the position data, the velocity data, the wake data and, the environment data. Aircraft 5 and 6 calculate and negotiate, either using a predetermined decision protocol or via direct communication between the crew of the respective aircraft, which is the best formation to reduce fuel consumption as overall. In this example aircraft 5 shall go into the slipstream of aircraft 6. The position-determination device of aircraft 5 determines the target position TP to be adopted and the autopilot unit determines a suitable route. In this way aircraft 5 locates itself into the wake region WR6 originated by aircraft 6 by entering from a perpendicular position so as to minimize the aerodynamical effect of flying through the boundary of the wake region.

Suitably, in case aircraft 5 leaves the formation, the position-determination device and the autopilot unit are configured to determine an exit target position, for instance, a target position parallel to aircraft 6 and to control aircraft 5 into the exit target position parallel to it.

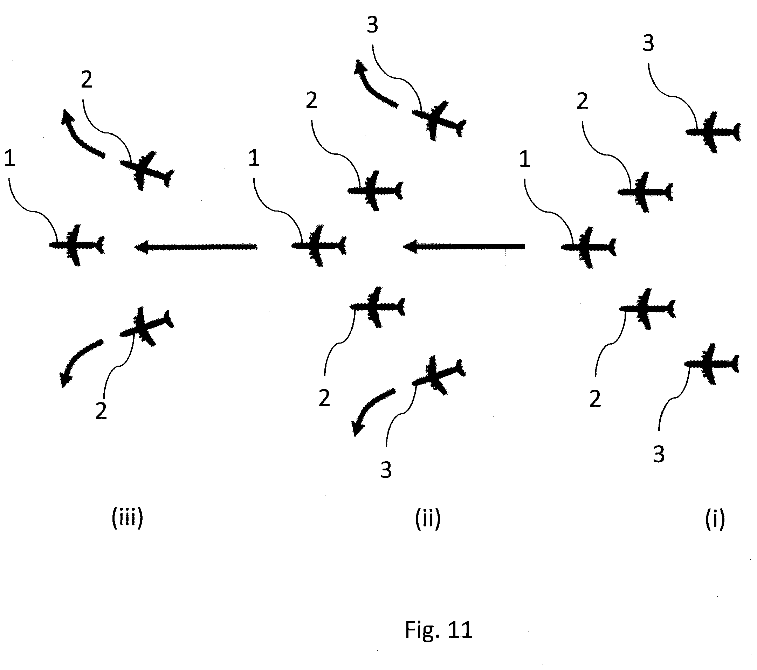

Fig. 11 shows a schematic representation of aircraft 1, 2 and 3 in a flight formation at three different points in time (i), (ii) and (iii). At least the aircraft 2 and 3 include a navigation control unit. When a flight formation such as the one shown in Fig. 11 (i) has to be dissolved, it should preferably be done in a safe manner, so that the aircraft are not endangered by vortices. As shown in the figure 11(ii) the aircraft 3 separate starboard, respectively portside. The process is repeated for aircraft 2, as shown in Fig. 11(iii). In a preferred embodiment, the velocity is kept at the same speed until the respective aircraft have left the region where vortices could disturb the aerodynamics of the aircraft. After having left the formation in a safe distance, the aircraft can fly at any suitable speed. The positions and speeds of the aircraft 2, 3 leaving the formation are advantageously determined based on a suitable positioning algorithm.

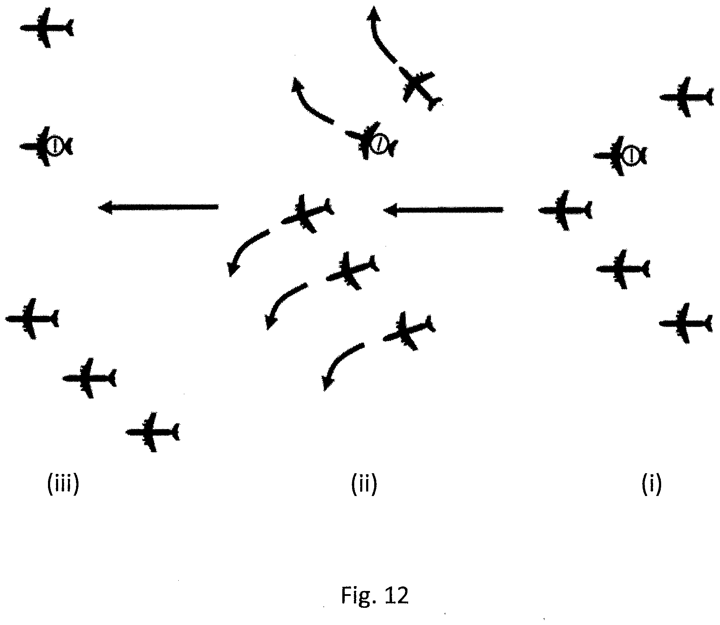

Fig. 12 shows a schematic representation of aircraft in a flight formation. Fig. 12 (i) represents the same flight formation shown in Fig. 11 (i). Fig 12 shows a particular example of how a positioning algorithm handles an emergency situation wherein an aircraft has to leave formation, due to, for instance, unexpected technical problems. The aircraft indicated with an exclamation sign must leave the formation as soon as possible since flying in formation may endanger the remaining aircraft of the flight formation. Dissolving the formation as described with reference to Fig. 11 may take too much time. A so-called virtual predetermined breaking point is a possible solution. In a first step the formation separates in two parts as shown in Fig. 12(ii). The breaking point is either portside or starboard, depending on the type of formation and the number of aircraft on each side. In the example below one group or subset of aircraft flies portside the other group starboard (here with the aircraft with problems). They remain at the same speed and are supported by the sensors and devices supporting the formation. Thus, two separate formations are formed. They must separate so far that no vortices endanger their flight. In the next step, shown in Fig. 12(iii), the aircraft with problems separates from the rest of the second formation, in the example in portside direction. Also, here they keep the same speed until the troubled aircraft is in a safe distance from the second formation. Alternatively, the two separating steps can be done even faster and more effective, if the troubled plane flies straight ahead and the aircraft on portside and starboard side separate at the same velocity forming two new independent formations. They separate in such a distance that neither the troubled aircraft is influenced by vortices nor the two different formations influence each other by vortices.

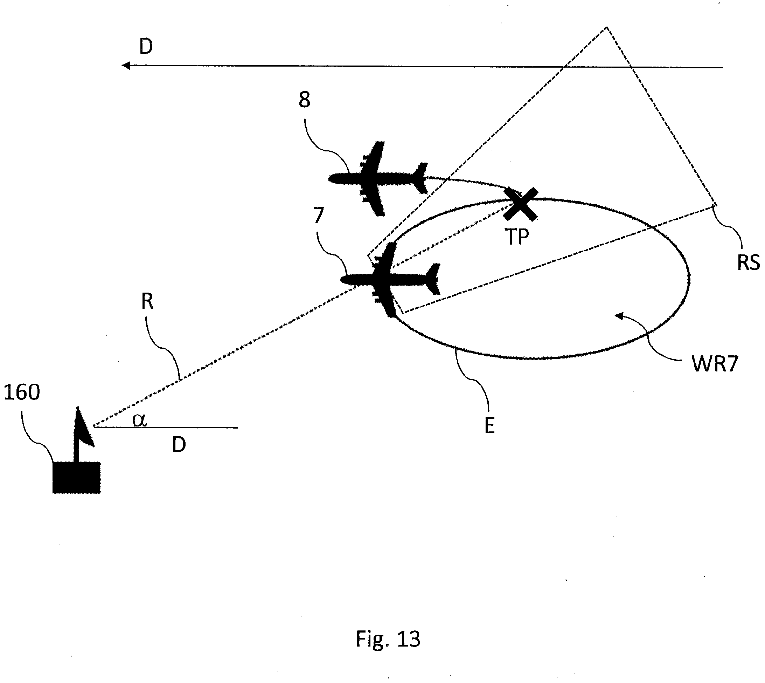

Fig. 13 shows a schematic representation of an example of formation of a flight formation including aircraft 7 and 8 in the presence of a radar unit 160. The position-determination unit of at least the aircraft 7 is additionally configured to ascertain radar-positioning data indicative of a position of the radar unit 160 and to determine the target position TP further based on this additional radar-positioning data.

The positioning data is, for example, indicative of an angle of arrival of a radar signal R, also referred to as entrance angle α. The entrance angle α and the geometry of the aircraft 7, determines a radar shadow region RS. Aircraft 8 also receives the information regarding the angle of arrival α, either by determining it itself or by receiving it from aircraft 7. The wake data ascertainment unit is configured to ascertain wake data that is indicative of a set of possible target positions which, for instance, is in the form of an ellipse E, an area bounded by an ellipse, an ellipsoid or a volume bounded by an ellipsoid The positioning algorithm is configured to determine the target position TP so that the aircraft 7 generating the wake region WR7 is located between the radar unit 160 of the radar signal and the target position TP.

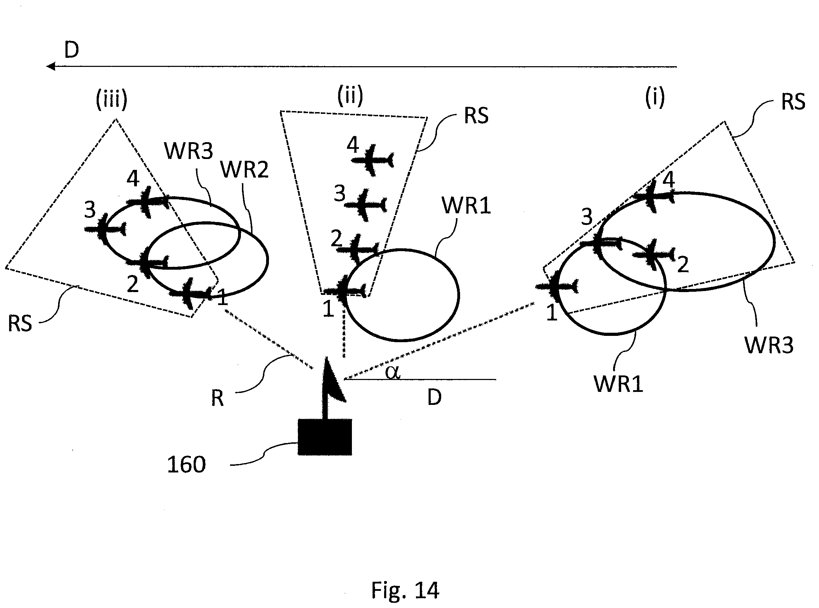

Preferably, the target position TP is determined as an intersection point of the ellipse E and a straight line from the arriving radar signal R, as inferred from the entrance angle α. Advantageously, this target position is determined either continuously or with a predetermined frequency, to avoid leaving a radar shadow cast by the aircraft generating the wake. Further, and depending on the relative position of the aircraft 7 and 8 and the radar unit 160, the target position can be a position outside of the wake region WR7 and also the roles of the leading and the following aircraft may interchange, so that at another point in time, aircraft 8 is the leading aircraft and the target position of aircraft 7 is located in a wake region generated by aircraft 8, as it is described below with reference to Fig. 14.

Therefore, advantageously, the target position of the following aircraft is calculated continuously so that at least one of the aircraft of the formation is positioned within a radar shadow of another aircraft.

Fig. 14 shows the flyby of an aircraft formation formed by aircraft 1, 2 3 and 4, relative to a radar unit 160 at three different points in time, labelled as (i), (ii), and (iii). In these cases, the instant example of embodiment includes controlling operation of a navigation control unit for controlling a position of an aircraft by the method described above and comprises operating the aircraft-position determination device by carrying out the method 800 of the preferred embodiment of the invention. Further, determining and providing 902 current-position data indicative of a current position of the air aircraft, in particular relative to the remaining aircraft of the formation; and receiving 904 the target-position data and the current-position data and controlling 906 the aircraft to adopt the target position using the target-position data and the current-position data.

In the following example of a particular embodiment, it is approved whether the target position unit is at a respective distance from every other aircraft of the formation that exceeds a minimum safety distance threshold.

The formation is flying along flying direction D and the radar unit is fixed, so that at any time, the radar signal R reaches the closest aircraft 1 at an entrance angle given by α. In position (i), the aircraft 2 and 3, flying behind the leading aircraft 1, are flying in the wake region generated by aircraft 1 to reduce fuel consumption and are flying simultaneously in the radar shadow RS of the leading aircraft 1, which is the aircraft closest to the radar unit. The aircraft is controlled 906 to adopt the target position using the target-position data and the current-position data when said respective distance exceeds the minimum safety distance threshold.

The target position is advantageously determined as the intersection point of an ellipse/ellipsoid determined using the wake data WR1 and a straight line from the arriving radar signal RS at an angle α. At this position, the actual size of the flight formation and the number of aircraft that integrates it are hidden to the radar unit 160, and simultaneously, fuel consumption is reduced. Aircraft 4, flies in the wake region WR3 generated by aircraft 3 and still under the radar shadow RS produced by aircraft 1.

In position (ii) the leading aircraft it at a position where the entrance angle is substantially perpendicular to the flying direction D, so that there is no intersection point between the ellipse or ellipsoid and the straight line defined by the radar signal arriving at an angle α, or there is an intersection but the position is too close to aircraft 1 so that it is ignored due to safety reasons. In this particular position, aircraft 2 cannot simultaneously be positioned in the wake region WR1 and in the radar shadow RS of aircraft 1, and the navigation control unit decides which of the two aspects has priority. Thus, the aircraft 2 is controlled to adopt a position along a straight line determined from the arriving radar signal (R), irrespective of the wake region when said respective distance does not exceed the minimum safety distance threshold.

In the cases shown in Fig. 14, it is more important that the number of aircraft in the formation remains hidden to the radar unit and thus, the target position determination unit is configured to overrule the determination of the target position within the wake region and to determine a target position in the shadow region RS. The aircraft 2, 3 and 4 thus leave the wake region causing a dynamic change of the aircraft position relative to each other and relative to the radar unit 160. Still, the radar shadow RS created by the aircraft 1 closest to the radar unit 160 is still maintained to hide other aircraft 2, 3, and 4 in the flight formation.

In position (iii), after the flyby of the flight formation relative to the static radar unit 160, another aircraft 3 has taken the lead of the flight formation and the following aircraft 2 and 4 are flying in the wake region WR3 of aircraft 3 to reduce fuel consumption. Aircraft 1 in turn is flying in the wake region WR1 of aircraft 2. Simultaneously, the aircraft 1 flying closest to the radar unit is creating the radar shadow RS to hide the other aircraft in the flight formation. The aircraft is controlled 906 to adopt the target position using the target-position data and the current-position data when said respective distance exceeds the minimum safety distance threshold.

In a particular embodiment of the method for controlling operation of a navigation control unit for controlling a position of an aircraft, the method comprises receiving possible target-position data in form of an ellipse or ellipsoid within the wake region and receiving data indicative of an entrance angle of an arriving radar signal, for instance an enemy radar signal. Thus, possible target-position data indicative of an ellipse E or an ellipsoid based on the respective wake region WR7 of a preceding aircraft in the aircraft formation are ascertained. Additionally, or alternatively an entrance angle α of a radar signal R is ascertained, the radar signal R being received by that aircraft 1 closest to a radar unit 160 providing the radar signal R, the entrance angle being determined with respect to a given direction D.

Then the method also includes determining the target-position TP within the ellipse E or ellipsoid, preferably by calculating an intersection point of the ellipse E or ellipsoid and the straight line determined from the arriving radar signal R and the aircraft closest to the radar unit 160; this is -in other words- by using the possible target position data and the entrance angle, for instance by calculating an intersection point of the ellipse/ellipsoid and a straight line from the arriving radar signal and, optionally, determining the varying target position within the ellipse or ellipsoid as a function of the moving interception point due to the moving aircraft relative to the static radar position.

In the flyby situation, the entrance angle is substantially perpendicular to the flying direction of the formation. Advantageously, the aircraft is configured, in this particular case, to leave the wake region and afterwards, the formation of aircraft is configured to cooperatively form a new formation with a new leading aircraft so that the flight formation including the leading aircraft is flying in the radar shadow of the aircraft following which is closest to the radar unit.

In summary the invention relates to an aircraft-position determination device for determining a target position of an aircraft within a flight formation. The position determination device is configured to ascertain position data indicative of a current position of all the aircraft within the formation, velocity data indicative of a current velocity measure of the aircraft within the formation and wake data indicative of a wake region, in particular a slipstream region and/or a vortex-drag region generated by a respective aircraft of the formation in a surrounding fluid. A target-position determination unit is configured to determine, using the ascertained data and a positioning algorithm, a target position to be adopted by the aircraft, the target position being in at least one wake region.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

### LIST OF REFERENCE SIGNS

- 1, 2, 3, 4, 5, 6, 7, 8: Aircraft
- 100, 101, 101.x, 102: Aircraft
- 150, 151A, 151B: Formation of aircraft
- 10, 20, 30: Aircraft-position determination device
- 11: Position ascertainment unit
- 12: Velocity ascertainment unit
- 13: Local environment data ascertainment unit
- 14, 24A, 24B: Wake data ascertainment unit
- 15: Target position determination unit
- 16: Storage for positioning algorithm
- 160: Radar unit
- 25: Receiving unit
- 26: Storage unit
- 27: Imaging device
- 28: Image analysis unit
- 50: Navigation control unit
- 51: Position control unit
- 52: Autopilot unit
- 53: Data output unit
- 54, 54.x: Sensing unit, pressure sensor
- 55: Storage unit
- 56: GPS unit
- 57: Radar unit
- 58: Laser/Lidar unit
- 59: Reflector
- 80x: Method steps
- 90x: Method steps
- α: Entrance angle of radar signal
- APD: Aircraft position data
- AVD: Aircraft velocity data
- AWD: Aircraft wake data
- CPD: Current position data
- CVD: Current velocity data
- D: Flight direction
- *d_{i,j}*: Distance between aircraft *i* and *j*
- *dₘᵢₙ*: Minimum distance allowed
- E: Ellipse
- ED: Environment data
- ID: Identification data
- LED: Local environment data
- PA: Positioning algorithm
- PD, PDi: Position data
- Pi: Position of aircraft *i*
- R: Radar signal
- RS: Radar shade
- SID: Self-identification data
- SWD: Self-wake data
- TP: Target position
- TPD: Target position data
- VD, VDi: Velocity data
- Vi: Velocity of aircraft *i*
- WD, WDi: Wake data
- WRx: Wake region

## Claims

1. An aircraft-position determination device (10), particularly for arrangement in an aircraft, and suitable for determining a target position (TP) of the aircraft (100) within a formation of aircraft (101.1, 101.2, 101.3), for assisting in forming a flight formation (102), the aircraft-position determination device comprising:
- a position ascertainment unit (11) configured to ascertain position data (PD) indicative of a current position of the aircraft of the formation of aircraft and to provide respective aircraft-position data (APD) indicative thereof;
- a velocity ascertainment unit (12) configured to ascertain velocity data (VD) indicative of a current velocity measure of the aircraft of the formation and to provide respective aircraft-velocity data (AVD) indicative thereof;
- a wake data ascertainment unit (14) configured to ascertain wake data (WD) indicative of a wake region, in particular a slipstream region and/or a vortex-drag region generated by a respective aircraft of the formation, or by the formation as a whole, in a surrounding fluid, and to provide respective aircraft-wake data (AWD) indicative thereof;
- a target-position determination unit (15) in communicating connection with the position ascertainment unit (11), the velocity ascertainment unit (12), and the wake data ascertainment unit (14), and configured to determine and provide target position data (TPD) indicative of a target position (TP) to be adopted by the aircraft within the flight formation, the target position being in at least one wake region and wherein the target position data is determined using the aircraft-position data (APD), the aircraft-velocity data (AVD), the local environment data (LED), the aircraft-wake data (AWD) and a predetermined positioning algorithm (PA).

2. The aircraft-position determination device of claim 1, further comprising:
- a local environment data ascertainment unit (13) configured to ascertain environment data (ED) pertaining to local environmental conditions, in particular air pressure, humidity, airflow velocity, airflow direction, and/or temperature, in a vicinity of the formation of aircraft and to provide local-environment data (LED) indicative thereof; and wherein
- the target position determination unit is communicating connection with the local environment data ascertainment unit (13) and configured to determine the target position data further using the local-environmental data (LED).

3. The aircraft-position determination device of claim 1 or 2, wherein the wake data ascertainment unit comprises a receiving unit for receiving, from the aircraft of the formation of aircraft, the wake data pertaining to the respective aircraft.

4. The aircraft-position determination device (20) of any one of claims 1 to 3, wherein the wake data ascertainment unit (24) comprises:
- a receiving unit (25) for receiving identification data indicative of a type of aircraft;
- a storage unit (26) for storing respective wake data associated to one or more types of aircraft;
and wherein the wake data ascertainment unit is configured to provide, as ascertained wake data, that stored wake data corresponding to the type of aircraft providing the identification data.

5. The aircraft-position determination device of one of claims 1 to 4, wherein the wake data ascertainment unit comprises:
- an imaging device (27) for obtaining image data of the air aircraft of the formation of aircraft; and
- an image analysis unit (28) configured to receive the image data, to determine, using the image data, the type of aircraft of the respective aircraft and to provide the identification data indicative of the type of the imaged aircraft to the receiving unit.

6. A navigation control unit (50), in particular for arrangement in an aircraft, and suitable for controlling a position of said aircraft, the navigation control unit comprising an aircraft-position determination device (30) according to any one of claims 1 to 5; and further comprising:
- a position control unit (51) configured to determine and provide current-position data (CPD) indicative of a current position of the aircraft; and
- an autopilot unit (52) connected to the aircraft-position determination device and to the position control unit and configured to receive the target position data and the current-position data and to control the air aircraft for adopting the target position using the target position data and the current-position data.

7. The navigation control unit of claim 6 further comprising a data output unit (53) configured to provide the current-position data (CPD), or current-velocity data (CVD) indicative of a current velocity of the aircraft, or self-wake data indicative of a wake region, in particular a slipstream region and/or a vortex-drag region generated by the air aircraft in a surrounding fluid, or self-identification data indicative of a type of the aircraft or any combination thereof.

8. The navigation control unit of claim 6 or 7, wherein the position control unit is configured to provide GPS-data pertaining to a current position of the air aircraft to the aircraft of the formation of aircraft, and to obtain GPS data pertaining to the respective positions of the aircraft of the formation of aircraft, and particularly wherein the position control unit is configured to provide the GPS-data in accordance with the Identification Friend or Foe protocol, in particular according to a Mode S squitter mode protocol.

9. The navigation control unit of any one of claims 6 to 8, wherein the position control unit comprises:
- a radar unit (57) for determining the current position of the aircraft relative to the remaining aircraft of the formation of aircraft; and/or
- a laser unit (58) for determining the current position of the air aircraft relative to the remaining aircraft of the formation of air aircraft.

10. An aircraft (100) comprising a navigation control unit (50) according to any one of claims 5 to 9.

11. A method (800) for operating an aircraft-position determination device for determining a target position of an air aircraft within a formation of aircraft for assisting in forming a flight formation, the method comprising, in particular for being executed at the aircraft-position determination device, and in any order, the steps of:
- ascertaining (802) position data (PD) indicative of a current position of the aircraft of the formation of aircraft and providing respective aircraft-position data (APD) indicative thereof;
- ascertaining (804) velocity data (VD) indicative of a current velocity measure of the aircraft of the formation of aircraft and providing respective aircraft-velocity data (AVD) indicative thereof;
- ascertaining (808) wake data (WD) indicative of a wake region, in particular a slipstream region and/or a vortex-drag region generated by a respective aircraft of the formation of aircraft in a surrounding fluid, and providing respective aircraft-wake data (AWD) indicative thereof; and further comprising:
- determining and providing (810), using the aircraft-position data, the aircraft-velocity data, the aircraft-wake data and a predetermined positioning algorithm, target position data (TPD) indicative of a target position (TP) to be adopted by the aircraft among the formation of aircraft, the target position being in at least one wake region.

12. The method of claim 11, further comprising:
- storing (801) respective wake data associated to one or more types of air aircraft;
- receiving (808.1) from the aircraft of the formation of aircraft, identification data indicative of a type of the respective aircraft; and
- providing (808.2), as ascertained aircraft wake data, that stored wake data corresponding to the type of aircraft providing the identification data.

13. A method (900) for controlling operation of a navigation control unit for controlling a position of an aircraft, the method comprises:
- operating an aircraft-position determination device by carrying out the method (800) of claim 11 or 12;
- determining and providing (902) current-position data indicative of a current position of the air aircraft, in particular relative to the remaining aircraft of the formation; and
- receiving (904) the target-position data and the current-position data and controlling (906) the aircraft to adopt the target position using the target-position data and the current-position data.

14. The method of any one of claims 11 to 13, comprising the step of:
- approving whether the target position unit is at a respective distance from every other aircraft of the formation that exceeds a minimum safety distance threshold.

15. The method of any one of claims 11 to 14, wherein
- the aircraft is controlled (906) to adopt the target position using the target-position data and the current-position data when said respective distance exceeds the minimum safety distance threshold, and/or
- the aircraft (2) is controlled to adopt a position along a straight line determined from the arriving radar signal (R), irrespective of the wake region when said respective distance does not exceed the minimum safety distance threshold.

16. The method of any one of claims 11 to 15, further comprising the steps of:
- ascertaining possible target-position data indicative of an ellipse (E) or an ellipsoid based on the respective wake region (WR7) of a preceding aircraft in the aircraft formation; and/or
- ascertaining an entrance angle (α) of a radar signal (R) received by that aircraft (1) closest to a radar unit (160) providing the radar signal (R), the entrance angle being determined with respect to a given direction (D).

17. The method of any one of claims 11 to 16, further comprising the step of:
- determining the target-position (TP) within the ellipse (E) or ellipsoid, preferably by calculating an intersection point of the ellipse (E) or ellipsoid and a straight line determined from the arriving radar signal (R) and the aircraft closest to the radar unit (160).

18. A computer program comprising instructions which, when the program is executed by a computer, cause the computer to carry out the method of any one of claims 11 to 17.
